Europäisches Patentamt

European Patent Office

Office européen des brevets

(11) Publication number: **0 470 260 A1**

## EUROPEAN PATENT APPLICATION
### published in accordance with Art. 158(3) EPC

(21) Application number: 91904333.1

(22) Date of filing: 22.02.91

(86) International application number: **PCT/JP91/00225**

(87) International publication number: **WO 91/13105 (05.09.91 91/21)**

(51) Int. Cl.⁵: **C08F 220/14**, G11B 7/24, C08F 220/22, C08F 220/18, C08F 220/12

(30) Priority: 23.02.90 JP 43996/90
12.04.90 JP 96857/90
14.11.90 JP 308164/90

(43) Date of publication of application: **12.02.92 Bulletin 92/07**

(84) Designated Contracting States: **DE FR GB**

(71) Applicant: **MITSUBISHI RAYON CO., LTD.**
**3-19, Kyobashi 2-chome Chuo-Ku**
**Tokyo 104(JP)**

(72) Inventor: **TAYAMA, Suehiro, Otake Plants**
**Mitsubishi Rayon Co., Ltd., 20-1, Miyuki-cho**
**Otake-shi, Hiroshima 739-06(JP)**
Inventor: **KAWACHI, Yasunori, Otake Plants**
**Mitsubishi Rayon Co., Ltd., 20-1, Miyuki-cho**
**Otake-shi, Hiroshima 739-06(JP)**
Inventor: **SASAKI, Shigeaki, Otake Plants**
**Mitsubishi Rayon Co., Ltd., 20-1, Miyuki-cho**
**Otake-shi, Hiroshima 739-06(JP)**

(74) Representative: **ter Meer, Nicolaus,**
**Dipl.-Chem.Dr.**
**Patentanwälte ter Meer, Müller, Steinmeister**
**Mauerkircherstrasse 45**
**W-8000 München 80(DE)**

(54) **METHACRYLIC RESIN MOLDING MATERIAL FOR OPTICAL INFORMATION RECORDING MEDIUM.**

㊧ A methacrylic resin molding material comprising a copolymer composed of 80 to 99.5 wt. % of methyl methacrylate units and 20 to 0.5 wt % of the units of at least one acrylate monomer selected from the group consisting of 2,2,2-trifluoroethyl acrylate, cyclohexyl acrylate, phenyl acrylate, benzyl acrylate, isobornyl acrylate and tricyclo[5.2.1.0$^{2,6}$]decanyl acrylate. It can be used advantageously as an excellent molding material for producing an optical information recording medium, because it has excellent heat resistance and good fluidity while retaining excellent optical and mechanical characteristics inherent in methacrylic resins, so that it can enhance the productivity in molding.

EP 0 470 260 A1

Fig.1

TECHNICAL FIELD

The present invention relates to a methacrylic resin molding material for an optical information-recording media such as a video disc.

BACKGROUND ART

Methacrylic resins have a good moldability and give molded articles having an excellent transparency and valuable optical characteristics, and accordingly, methacrylic resins are used for various optical equipment. Currently, methacrylic resins are used for substrates of optical information-recording media such as video discs by taking advantage of their excellent characteristics.

A resin material optical strain of which is small, and having a practically satisfactory mechanical strength, an excellent heat resistance, and an excellent moldability is required for a substrate of an optical information-recording medium, and because of the recent increased demand for video discs, an increase of the productivity of discs at the injection molding, i.e., a shortening of the molding cycle, is sought in the art. Accordingly, as the performances required for the resin material, there can be mentioned a good flowability and a high heat resistance. When the flowability is at the same level, a material having a higher heat resistance can be removed from the mold at a higher temperature, and thus the molding cycle can be shortened.

As the methacrylic resin for an optical information-recording medium, there has been proposed a methyl methacrylate/ethyl acrylate copolymer (Japanese Unexamined Patent Publication No. 57-123208). Where methyl methacrylate and ethyl acrylate are used, however, if the flowability is improved, the optical strain is lowered, but disadvantages such as a reduction of the heat resistance and reduction of the mechanical strength appear, and accordingly, it was difficult to improve the productivity at the molding. Namely, if the copolymerization ratio of ethyl acrylate is increased to improve the flowability, the heat resistance is drastically reduced. This is undesirable from the view point of its practical use. If a method of reducing the molecular weight without changing the copolymerization ratio of ethyl acrylate is adopted to increase the flowability while maintaining a good heat resistance, the mechanical strength becomes practically unsatisfactory.

Currently, substrates of optical information-recording media, especially video discs and audio discs, are mainly produced by injection molding, and the molding cycle is determined by the heat resistance and flowability of the resin taking the productivity into consideration. To improve the productivity at the injection molding, the flowability of the resin must be improved without sacrificing characteristics such as a small optical strain, a high transparency and a high mechanical strength; and the heat resistance must be improved to shorten the cooling time at the injection molding. In known materials, however, if the heat resistance is improved, a reduction of the flowability or reduction of the mechanical strength occurs.

DISCLOSURE OF THE INVENTION

Under the above-mentioned background, investigation has been conducted on methacrylic resins as molding materials for optical information-recording media, and as a result, it has been found that a substrate for an optical information-recording medium, not having any of the above-mentioned defects, can be manufactured with a high productivity.

More specifically, the present invention is to provide a methacrylic resin molding material for an optical information-recording medium, which comprises a copolymer comprising 80 to 99.5% by weight of methyl methacrylate units and 20 to 0.5% by weight of units of at least one acrylate monomer selected from the group consisting of 2,2,2-trifluoroethyl acrylate, cyclohexyl acrylate, phenyl acrylate, benzyl acrylate, isobornyl acrylate and tricyclo[5,2,1,0$^{2.6}$]decanyl acrylate.

BRIEF DESCRIPTION OF THE DRAWING

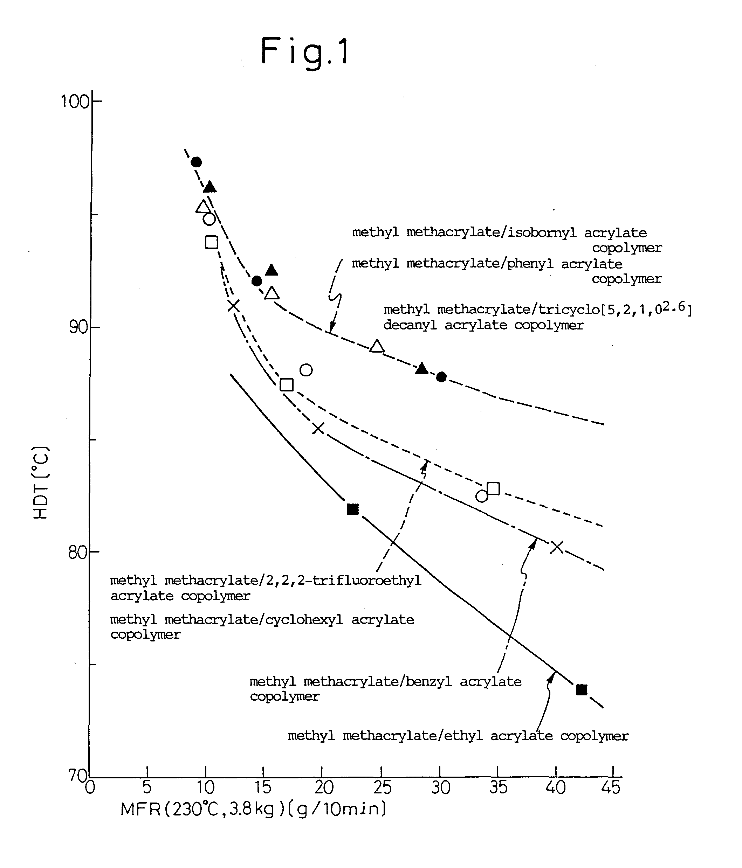

Fig. 1 is a graph showing the relationship between the heat distortion temperature and the melt flow rate, which illustrates the excellent heat resistance and flowability of the methacrylic resin molding material of the present invention.

BEST MODE OF CARRYING OUT THE INVENTION

If the copolymerization ratio in the copolymer constituting the methacrylic resin molding material of the present invention is outside the above-mentioned range, it is impossible to improve the heat resistance to increase the productivity at mass-production while maintaining a high mechanical strength of the molded article. More specifically, if the amount of methyl methacrylate units exceeds 99.5% by weight, the molecular weight must be reduced to maintain a good molding flowability of the resin, with the result that the mechanical strength is lowered. On the other hand, if the amount of acrylate units exceeds 20% by weight, the mechanical strength is drastically lowered or the heat resistance is reduced.

The melt flow rate of the copolymer is preferably 0.5 to 50 g/10 minutes, most preferably 5 to 50 g/10 minutes, as determined under a load of 3.8 kg according to ASTM D-1238. If the melt flow rate is lower than 0.5 g/10 minutes, the transferability of an information from the mold is poor and the optical strain of the molded article tend to be increased. On the other hand, if the melt flow rate is higher than 50 g/10 minutes, the mechanical strength tend to be lowered. In view of the use of the molding material as an information-recording medium, preferably the mechanical strength is such that the tensile strength is at least 300 kg/cm$^2$, particularly at least 400 kg/cm$^2$, as determined according to ASTM D-638.

To prevent heat distortion upon molding or during use, the heat distortion temperature of the copolymer is preferably at least 70°C, most preferably at least 80°C, as determined under a load of 18.56 kg according to ASTM D-648. If the heat distortion temperature is lower than 70°C, the heat resistance of the molded article is poor, and the heat distortion is large upon molding or during use.

By using a methacrylic resin molding material satisfying the above requirements, the productivity at the molding can be improved compared with the productivity in the conventional procedure, and a molded article having a small optical strain, an excellent transparency and a high mechanical strength can be obtained. From Fig. 1 of the accompanying drawing, it is obvious that the methacrylic resin molding material of the present invention has an excellent balance between the flowability and the heat resistance.

Methods customarily adopted for the production of acrylic resins, such as suspension polymerization, bulk polymerization and solution polymerization, can be used for the production of the molding material of the present invention, and additives such as a stabilizer, a mold release agent, a lubricant, a plasticizer and a dye can be added to the acrylic resin molding material of the present invention according to need.

The molding material of the present invention prepared in the above-mentioned manner can be processed by any injection molding and compression molding method.

The methacrylic resin molding material of the present invention has a high heat resistance and flowability while maintaining the excellent optical and mechanical characteristics inherently possessed by a methacrylic resin, and the productivity at the molding is also improved. Accordingly, the methacrylic resin molding material of the present invention can be advantageously used for the manufacture of optical information-recording media.

The present invention will now be described in detail with reference to the following examples. In the examples, the characteristic values were determined according to the following methods.

(1) Heat Distortion Temperature (HDT)

The heat distortion temperature was measured under a load of 18.56 kg according to ASTM D-648.

(2) Melt Flow Rate (MFR)

The melt flow rate was measured under a load of 3.8 kg according to ASTM D-1238.

(3) Tensile Strength and Tensile Elongation

A dumbbell A specimen was injection-molded by PS-60E supplied by Nissei Jushi Co., Ltd., and the measurement was carried out according to ASTM D-638.

(4) Light Transmission

A disc (1.2 mm in thickness) having a diameter of 300 mm was formed by injection molding by Dia-Melter M-200 supplied by Meiki Seisakusho (cylinder temperature was 260°C), and the light transmission at a point 7 cm apart from the center was measured over a region of 500 to 900 nm by UV-160A supplied by Shimazu Seisakusho.

(5) Birefringence (Retardation)

4

The birefringence (retardation) of the same disc as described above at a point 7 cm apart from the center was measured by a polarizing microscope (OPTIPHOT-POL SENARMONT COMPENSATOR supplied by Nikon, used wavelength = 546 nm, single phase).

In the examples, all of "%" and "parts" are by weight.

## Examples 1 through 18

In each 100 parts of monomer mixtures having the composition shown in Table 1 was dissolved 0.35 part of n-octylmercaptan, and 0.44 part of lauroyl peroxide as a polymerization catalyst, 0.1 part of stearyl alcohol as a mold release agent, 0.01 part of a copolymer of methyl methacrylate and potassium 3-methacryloyloxypropane-sulfonate as a suspension polymerization dispersant, 0.15 part of sodium sulfate and 145 parts of water as a dispension medium were supplied together with the monomer mixture into a glass flask polymerization device equipped with a stirrer and a thermometer. Polymerization was carried out at 80°C, and after the inner temperature reached a highest level, the reaction product was maintained at 95°C for 30 minutes, cooled, filtered, washed with water and dried to obtain a bead polymer. The obtained polymer was kneaded at 240°C and pelletized by a 40 mm-extruder supplied by Tanabe Plastic Kikai.

Various evaluation tests were carried out with respect to each of the obtained pellets, and the results are shown in Table 1. In each example, the light transmission was higher than 91% in a wavelength region of 500 to 900 nm, and the birefringence (retardation) was smaller than 20 nm in each example.

## Comparative Examples 1 through 9

The procedures of Example 1 were repeated in the same manner as described in Example 1 except that each 100 parts of monomer mixtures having the composition shown in Table 2 were used. The results are shown in Table 2. The polymer obtained by copolymerizing 30 parts of 2,2,2-trifluoroethyl acrylate and 70 parts of methyl methacrylate (Comparative Example 1) and the polymer obtained by copolymerizing 30 parts of cyclohexyl acrylate and 70 parts of methyl methacrylate (Comparative Example 2) could not be pelletized at the extrusion molding because the heat resistance was very poor, and thus these polymers had no practical utility. A copolymer obtained by copolymerizing 30 parts of phenyl acrylate and 70 parts of methyl methacrylate (Comparative Example 3), a copolymer obtained by copolymerizing 30 parts of benzyl acrylate and 70 parts of methyl methacrylate (Comparative Example 4), a copolymer obtained by polymerizing 30 parts of isobornyl acrylate and 70 parts of methyl methacrylate (Comparative Example 5) and a copolymer obtained by copolymerizing 20 parts of tricyclo$[5,2,10^{2.6}]$decanyl acrylate and 80 parts of methyl methacrylate (Comparative Example 6) had a low mechanical strength, and therefore, these copolymers could not be practically used. A polymer obtained by polymerizing 100 parts of methyl methacrylate (Comparative Example 9) had MFR of 22.5 g/10 minutes and the flowability of this polymer was comparable to that attained in Comparative Example 7, but the tensile strength of this polymer was lower than 1/2 of the tensile strength attained in Comparative Example 7. Accordingly, the polymer had no practical utility.

The relationships between the MFR and HDT obtained in Examples 1 through 18 and Comparative Examples 7 and 8, are shown in Fig. 1. When the preparation of a molding material having an MFR of 20 g/10 minutes is intended, it is seen that, with benzyl acrylate/methyl methacrylate copolymer, the HDT is improved by about 2.5°C than methyl methacrylate/ethyl acrylate copolymer. Furthermore, it is seen that, with 2,2,2-trifluoroethyl acrylate/methyl methacrylate copolymer and the cyclohexyl acrylate/methyl methacrylate copolymer, the HDT is improved by about 4°C than methacrylate/ethyl acrylate copolymer. It also is seen that, with tricyclo$[5,2,1,0^{2.6}]$decanyl acrylate/methyl methacrylate copolymer, isobornyl acrylate/methyl methacrylate copolymer and phenyl acrylate/methyl methacrylate copolymer, the HDT is improved by about 7°C than methyl methacrylate/ethyl acrylate copolymer. From these results, it can be understood that copolymers of methyl methacrylate and the acrylates shown in Table 1 are superior to methyl methacrylate/ethyl acrylate copolymer in the moldability in the sense of the productivity.

## INDUSTRIAL APPLICABILITY

The methacrylic resin molding material of the present invention can be advantageously used for the production of optical information-recording media.

EP 0 470 260 A1

<u>Table 1</u>

| | | Exam-ple 1 | Exam-ple 2 | Exam-ple 3 | Exam-ple 4 | Exam-ple 5 | Exam-ple 6 | Exam-ple 7 | Exam-ple 8 | Exam-ple 9 | Exam-ple 10 |
|---|---|---|---|---|---|---|---|---|---|---|---|
| Charged Monomer Compo-sition (%) | methyl methacrylate | 95 | 90 | 85 | 95 | 90 | 85 | 95 | 90 | 85 | 95 |
| | 2,2,2-trifluoroethyl acrylate | 5 | 10 | 15 | - | - | - | - | - | - | - |
| | cyclohexyl acrylate | - | - | - | 5 | 10 | 15 | - | - | - | - |
| | phenyl acrylate | - | - | - | - | - | - | 5 | 10 | 15 | - |
| | benzyl acrylate | - | - | - | - | - | - | - | - | - | 5 |
| | tricyclo[5,2,1,0$^{2.6}$] decanyl acrylate | - | - | - | - | - | - | - | - | - | - |
| | isobornyl acrylate | - | - | - | - | - | - | - | - | - | - |
| (Parts) | n-octylmercaptan | 0.35 | ← | ← | ← | ← | ← | ← | ← | ← | ← |
| | lauroyl peroxide | 0.44 | ← | ← | ← | ← | ← | ← | ← | ← | ← |
| MFR (g/10 minutes) | | 10.0 | 18.5 | 33.3 | 10.3 | 16.9 | 34.4 | 9.5 | 15.5 | 24.4 | 12.1 |
| HDT (°C) | | 94.8 | 88.1 | 82.5 | 93.8 | 87.5 | 82.8 | 95.4 | 91.6 | 89.2 | 91.0 |
| Tensile Strength (kg/cm$^2$) | | 650 | 640 | 530 | 600 | 580 | 500 | 570 | 610 | 500 | 640 |
| Tensile Elongation (%) | | 2.9 | 2.8 | 2.1 | 2.5 | 2.3 | 1.9 | 2.1 | 2.3 | 1.7 | 2.6 |

Table 1 (Continued)

|  |  | Example 11 | Example 12 | Example 13 | Example 14 | Example 15 | Example 16 | Example 17 | Example 18 |
|---|---|---|---|---|---|---|---|---|---|
| Charged Monomer Composition (%) | methyl methacrylate | 90 | 85 | 95 | 90 | 85 | 95 | 90 | 85 |
|  | 2,2,2-trifluoroethyl acrylate | - | - | - | - | - | - | - | - |
|  | cyclohexyl acrylate | - | - | - | - | - | - | - | - |
|  | phenyl acrylate | - | - | - | - | - | - | - | - |
|  | benzyl acrylate | 10 | 15 | - | - | - | - | - | - |
|  | tricyclo[5,2,1,0$^{2.6}$] decanyl acrylate | - | - | 5 | 10 | 15 | - | - | - |
|  | isobornyl acrylate | - | - | - | - | - | 5 | 10 | 15 |
| (Parts) | n-octylmercaptan | 0.35 | ← | ← | ← | ← | ← | ← | ← |
|  | lauroyl peroxide | 0.44 | ← | ← | ← | ← | ← | ← | ← |
| MFR (g/10 minutes) |  | 19.5 | 39.9 | 8.8 | 14.1 | 30.0 | 9.9 | 15.5 | 28.1 |
| HDT (°C) |  | 85.5 | 80.2 | 97.3 | 92.1 | 87.8 | 96.3 | 92.6 | 88.2 |
| Tensile Strength (kg/cm$^2$) |  | 590 | 470 | 680 | 580 | 440 | 660 | 540 | 420 |
| Tensile Elongation (%) |  | 2.3 | 1.7 | 2.7 | 2.1 | 1.5 | 2.8 | 2.1 | 1.9 |

Table 2

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Charged Monomer Composition (%) methyl methacrylate | 70 | 70 | 70 | 70 | 70 | 80 | 90 | 85 | 100 |
| 2,2,2-trifluoroethyl acrylate | 30 | - | - | - | - | - | - | - | - |
| cyclohexyl acrylate | - | 30 | - | - | - | - | - | - | - |
| phenyl acrylate | - | - | 30 | - | - | - | - | - | - |
| benzyl acrylate | - | - | - | 30 | - | - | - | - | - |
| isobornyl acrylate | - | - | - | - | 30 | - | - | - | - |
| tricyclo[5,2,1,0$^{2.6}$]decanyl acrylate | - | - | - | - | - | 20 | - | - | - |
| ethyl acrylate | - | - | - | - | - | - | 10 | 15 | - |
| (Parts) n-octylmercaptan | 0.35 | ↓ | ↓ | ↓ | ↓ | ↓ | ↓ | ↓ | 0.62 |
| lauroyl peroxide | 0.44 | ↓ | ↓ | ↓ | ↓ | ↓ | ↓ | ↓ | ↓ |
| MFR (g/10 minutes) | - | - | 120.0 | 140.5 | 132.0 | 38.2 | 22.5 | 42.3 | 22.5 |
| HDT (°C) | - | - | 75.6 | 64.3 | 73.2 | 88.8 | 81.9 | 73.8 | 103.1 |
| Tensile Strength (kg/cm$^2$) | - | - | 250 | 290 | 240 | 290 | 640 | 550 | 210 |
| Tensile Elongation (%) | - | - | 0.8 | 1.0 | 0.9 | 2.0 | 3.4 | 2.5 | 0.7 |

## Claims

1. A methacrylic resin molding material for optical information-recording media, which comprises a copolymer comprising 80 to 99.5% by weight of methyl methacrylate units and 20 to 0.5% by weight of units of at least one acrylate monomer selected from the group consisting of 2,2,2-trifluoroethyl acrylate, cyclohexyl acrylate, phenyl acrylate, benzyl acrylate, isobornyl acrylate and tricyclo[5,2,1,0$^{2.6}$]-

decanyl acrylate.

2. The molding material as set forth in claim 1, wherein the melt flow rate of the copolymer is 0.5 to 50 g/10 minutes as determined under a load of 3.8 kg according to ASTM D-1238.

3. The molding material as set forth in claim 2, wherein the melt flow rate is 5 to 50 g/10 minutes.

4. The molding material as set forth in claim 1, wherein the heat distortion temperature of the copolymer is at least 70°C as determined under a load of 18.5 kg according to ASTM D-648.

5. The molding material as set forth in claim 4, wherein the heat distortion temperature is at least 80°C.

6. The molding material as set forth in claim 1, wherein the tensile strength of the copolymer is at least 300 kg/cm$^2$ as determined according to ASTM D-638.

7. The molding material as set forth in claim 6, wherein the tensile strength is at least 400 kg/cm$^2$.

# Fig.1

methyl methacrylate/isobornyl acrylate copolymer

methyl methacrylate/phenyl acrylate copolymer

methyl methacrylate/tricyclo[5,2,1,0$^{2.6}$] decanyl acrylate copolymer

methyl methacrylate/2,2,2-trifluoroethyl acrylate copolymer

methyl methacrylate/cyclohexyl acrylate copolymer

methyl methacrylate/benzyl acrylate copolymer

methyl methacrylate/ethyl acrylate copolymer

HDT (°C)

MFR (230°C, 3.8kg) (g/10min)

# INTERNATIONAL SEARCH REPORT

International Application No PCT/JP91/00225

| **I. CLASSIFICATION OF SUBJECT MATTER** (if several classification symbols apply, indicate all) 6 |
|---|

According to International Patent Classification (IPC) or to both National Classification and IPC

Int. Cl$^5$  C08F220/14, G11B7/24, C08F220/22, C08F220/18, C08F220/12

| **II. FIELDS SEARCHED** |
|---|

| Minimum Documentation Searched 7 | |
|---|---|
| Classification System | Classification Symbols |
| IPC | C08F220/10-24, G11B7/24 |

Documentation Searched other than Minimum Documentation
to the Extent that such Documents are Included in the Fields Searched 8

Jitsuyo Shinan Koho          1926 - 1991
Kokai Jitsuyo Shinan Koho    1971 - 1991

| **III. DOCUMENTS CONSIDERED TO BE RELEVANT** 9 | | |
|---|---|---|
| Category * | Citation of Document, 11 with indication, where appropriate, of the relevant passages 12 | Relevant to Claim No. 13 |
| X | JP, A, 59-159807 (Konica Corp.), September 10, 1984 (10. 09. 84), Claim (Family: none) | 1-7 |
| X | JP, A, 59-197412 (Showa Denko K.K.), November 9, 1984 (09. 11. 84), Claim (Family: none) | 1-7 |
| X | JP, A, 60-99111 (Hitachi Chemical Co., Ltd.), June 3, 1985 (03. 06. 85), Claim & EP, A, 141610 & US, A, 4591626 & JP, A, 60-90204 & JP, A, 61-73705 | 1-7 |
| X | JP, A, 60-115605 (Mitsubishi Rayon Co., Ltd.), June 22, 1985 (22. 06. 85), Claim (Family: none) | 1-7 |
| Y | JP, A, 58-5318 (Mitsubishi Rayon Co., Ltd.), | 1-7 |

* Special categories of cited documents: 10
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

| **IV. CERTIFICATION** | |
|---|---|
| Date of the Actual Completion of the International Search | Date of Mailing of this International Search Report |
| March 5, 1991 (05. 03. 91) | March 18, 1991 (18. 03. 91) |
| International Searching Authority | Signature of Authorized Officer |
| Japanese Patent Office | |

Form PCT/ISA/210 (second sheet) (January 1985)